Europäisches Patentamt

European Patent Office

Office européen des brevets

(11) Publication number: 0 351 048 A2

## EUROPEAN PATENT APPLICATION

(21) Application number: 89305566.5

(22) Date of filing: 02.06.89

(51) Int. Cl.⁴ G11B 5/187 , G11B 5/31 , //G11B5/245

(30) Priority: 11.07.88 US 217397

(43) Date of publication of application:
17.01.90 Bulletin 90/03

(84) Designated Contracting States:
AT BE CH DE ES FR GB GR IT LI LU NL SE

(71) Applicant: DIGITAL EQUIPMENT CORPORATION
111 Powdermill Road
Maynard Massachusetts 01754-1418(US)

(72) Inventor: Ramaswamy, Seshadri
155 Goodmans Hill Road
Sudbury Massachusetts 01776(US)
Inventor: Sidman, Alan Lee
29 Leewood Road
Wellesly Massachusetts 02181(US)

(74) Representative: Goodman, Christopher et al
Eric Potter & Clarkson 14 Oxford Street
Nottingham NG1 5BP(GB)

(54) Recording head to optimize high density recording.

(57) Recording head to optimize high density recording by reduction of hooks on ends of transitions, the recording head having at least two poles with a gap section inbetween and configured with the second pole and gap section being greater in width than the first pole. Transverse field components are reduced at the head fringes and the transition becomes substantially parallel to gap. The vertical components of the head field are also minimized. Method for producing head with narrow first pole includes planarization of first pole area to receive wider gap layer and wider second pole.

FIG. 3

## RECORDING HEAD TO OPTIMIZE HIGH DENSITY RECORDING

### Background of the Invention

The present invention relates to design of a magnetic recording head which optimizes high density longitudinal recording.

A magnetic recording head produces a magnetic field which has transverse, vertical, and longitudinal components. The longitudinal component is directed along the recording medium direction of motion, the vertical component is normal to the plane of the medium, and the transverse component is oriented along the track width direction. Recording heads are ordinarily designed such that the strength of the head field at the medium midplane directly beneath the gap center line of the head is about two to three times the value of the medium coercivity, where coercivity is the amount of field strength necessary to switch the orientation of the magnetization in the medium. A track is created during the head write cycle by the downstream magnetic field of the head where it equals the coercivity threshold of the medium. When a data bit is written, the medium magnetic orientation is reversed on the track at an assigned location. Each of the sections of the medium where the magnetization has been reversed is referred to individually as a "transition". The width of the track defined on the recording medium will be approximately equal to the width of the head gap.

A typical recording head will include two pole pieces with the gap defined therebetween. The actual recording of a transition occurs somewhat downstream along the direction of the moving medium, approximately 0.25 microns into the second pole piece in the longitudinal direction.

The transverse field component from the head is comparable in magnitude to the longitudinal field component at the sides of the head, the latter known as the fringe zones. For thin film media, the two in-plane components of the head field, i.e. the transverse and longitudinal components, add vectorially in their impact on the transition. In the midsection of the track, only the longitudinal field exists and hence it produces an essentially straight line transition perpendicular to the direction of medium movement. However, the recorded transition is not parallel to the gap in the fringe zones because of the varying degrees of interaction between the two in-plane components. In fact, at the fringe zones the transition will be perturbed at its ends where hooks are defined protruding further into the downstream section of the medium. These hooks cause inter-symbol interference during the writing of closely spaced bits and can cause lateral asymmetry in the readback pulse. In addition, the medium coercivity may be degraded when the perpendicular (vertical) component of the head field that is imposed upon the medium is large.

In the known processes used to manufacture recording heads of the type discussed above, the second pole is normally configured to be as wide as or about one to three microns narrower than the first pole at the gap. Such designs suffer from the fringe zone and vertical field effects problems discussed above during longitudinal recording on thin film media.

### Summary of the Invention

In one aspect of the invention, a method is disclosed in which a recording head having two pole pieces is designed so as not to produce hooks in a recorded transition. In such arrangement, the transverse head field components are substantially reduced in the recorded zone by producing a second pole piece which is wider in cross-section at its tip than the first pole piece tip cross-section.

In another aspect of the invention, where a magnetic recording head has two pole pieces defining a gap section or layer therebetween, the second pole piece is configured to be perhaps about one or more microns wider than the first pole piece. In this arrangement, the transverse fields at the fringe zones are reduced by approximately 35% and also the contours of the longitudinal component of the head field become parallel to the gap at the fringe zones. Such a field distribution eliminates the hooks at the ends of the transition and permits the transition to be defined parallel to the gap at such locations. A straight transition prevents the nonlinear interference between a current transition and the previous transition during the writing process.

In another aspect of the present invention, where a magnetic recording head has two pole pieces defining a gap layer therebetween, the second pole piece is configured to be perhaps about one or more microns wider than the first pole piece. In this arrangement, the transverse fields at the fringe zones are reduced by approximately 35%, compared to where the first pole piece is wider than the second pole piece, and also the contours of the longitudinal component of the head field become parallel to the gap at such locations. This field distribution eliminates the hooks. The transition now becomes parallel to the gap. The vertical component of the head field at the recording zone is also reduced by 35% compared to the field produced by the current designs. Therefore, the resultant head field at the recording zone is only about 50° out-of-plane and does not cause an appreciable degradation in the in-plane switching field of high coercivity media, thus providing sharper transitions.

In an alternative configuration of the present invention, a third pole piece, which is both thin and saturable at the tip, is embedded within the gap. This third pole is saturated and is effectively inoperative during the write cycle, but is not saturated and effectively dominates operation during the readback cycle. As a result of the operation and configuration of the third pole, the readback waveform will be nearly symmetrical.

Other advantages and features will become apparent from the following description of the preferred embodiment and from the claims.

Brief Description of the Drawings

Fig. 1 is a graphical representation of a typical waveform generated by a thin film recording head reading a transition from a magnetic storage medium.

Fig. 2 is a graphical representation of the vectorial sum of the in-plane magnetic field components from different head pole tip geometries, as experienced at the medium mid-surface.

Fig. 3 is a cross-sectional schematic view of a preferred embodiment of the present invention.

Description of the Preferred Embodiment

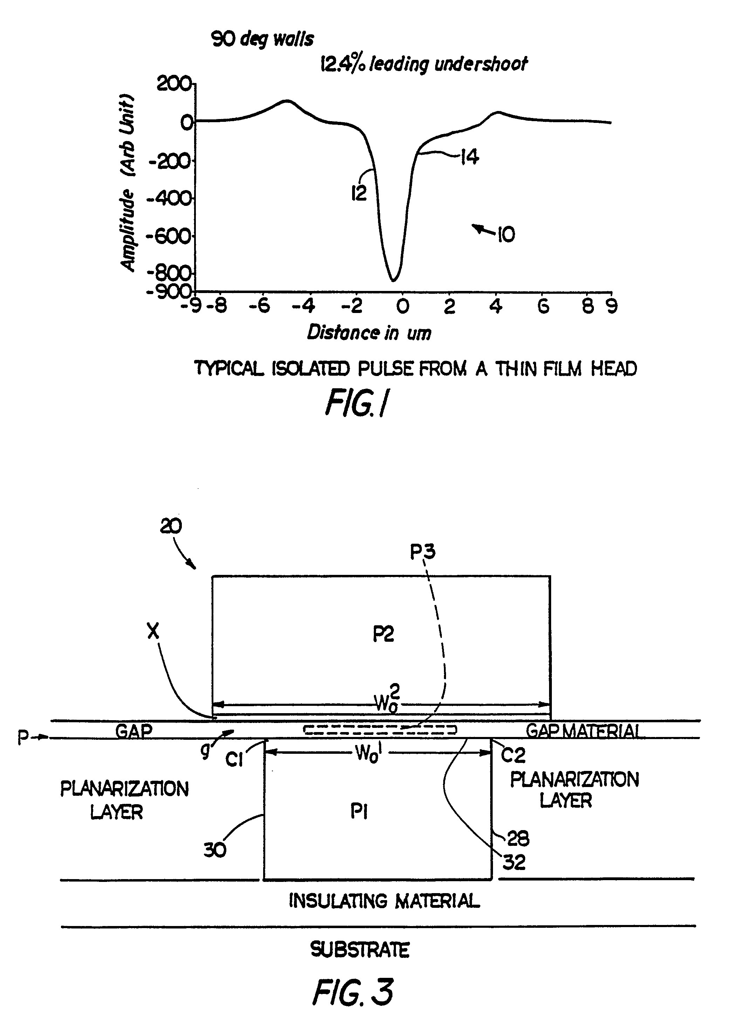

A typical waveform generated by a thin film magnetic recording head reading a transition from a magnetic medium is shown in the graphical representation of Fig. 1. It will be noted that pulse 10 is defined by a leading half 12 and a trailing half 14, which are not exactly alike. This asymmetry contributes to the variable peak shifts which normally occur when reading a series of transitions from a medium. If the transverse components of waveforms arising from transverse recording were substantially reduced, then the asymmetry and the variability in the peak shifts would be minimized accompanied by an attendant increase in window margin.

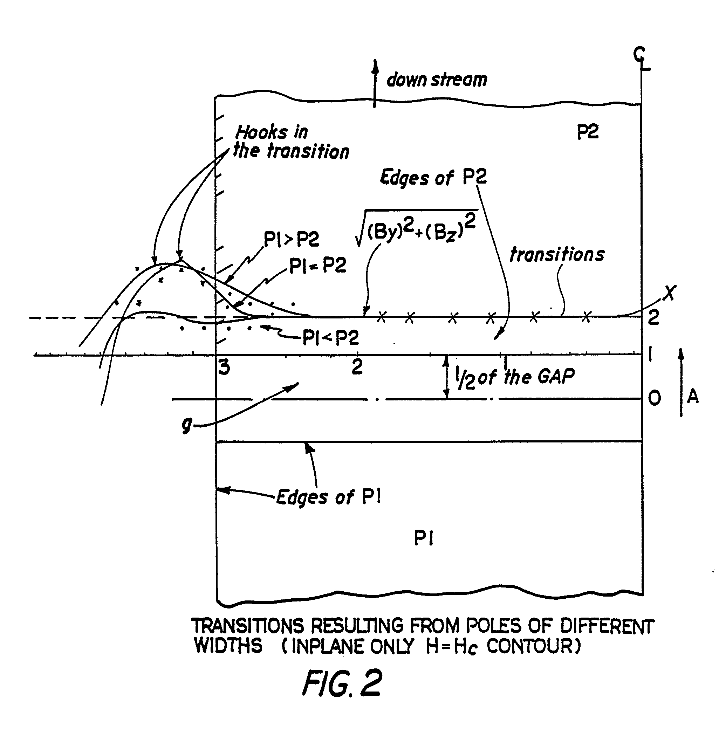

Turning now to Fig. 2, which is a graphical representation of a transition from each of three recording head pole tip geometries (the first pole greater than, equal to, and less than the second pole), the ill effects of transverse field components upon recording will be described. Upon this graph is superimposed the projection of a magnetic head having two equal width poles, P1 and P2, where adjacent portions of the P1 and P2 pole tips are shown defining gap g. In Fig. 2, distance along the track is shown in an arbitrary scale on the X-axis, while location of a transition relative to location of the gap is also shown in an arbitrary scale on the Y-axis. Furthermore, for each pole tip geometry, only the contour along which the effective in-plane head field equals the coercivity of the medium is shown, which is the active recording region of the head during the write cycle. Also shown is an arrow A which indicates the direction of medium movement, and a center line indication on the right hand vertical axis which signifies that only one half of the transition and the recording head are shown in this figure.

When the width of the P2 pole at the air bearing surface is equal to or less than that of P1, the magnitude of the transverse components of the head field are about the same as or are larger than that of the longitudinal components at the fringe zones. Hence, the vectorial sum of these components at the fringe zones will be at the level of the recording medium coercivity further downstream than at the center of the poles. Therefore, the recorded transition will be imparted with hooks at the fringe zones which will interact with the previously recorded bit, causing nonlinear inter-symbol interference at high bit densities. These hooks can be about 1.5 micron wide on either side of the pole edges and can penetrate about 0.3 microns downstream, depending upon the field produced by the head. As the write current through the head is increased, the head field influencing the medium increases proportionately and the hooks become more prominent. Therefore, at high bit densities, this nonlinear interference between closely recorded bits causes a reduction of readback amplitude as the write current is increased, a phenomenon which we define as "peakiness."

It will be appreciated that the transverse component of the head field has an asymmetrical distribution along the direction of media motion. Thus, if the transverse head field along one pole is considered as being positive, then the transverse head field along the other pole will be negative. By the principle of reciprocity, it can be shown that the resulting transverse readback waveform is also asymmetrical. This transverse readback waveform is of opposite sign to the longitudinal readback waveform during the leading portion 12 of the central pulse 10 of Fig. 1; it is of the same sign as the longitudinal readback waveform during the trailing portion 14 of Fig. 1. This is a result of the transverse head field during readback near pole P1 being in a direction opposite to the direction of the transverse orientation of the medium magnetization which has been determined during writing by pole P2. Hence, the leading position's "20%-to-90%" rise time of the resulting readback pulse is reduced, while the trailing portion's "90%-to-20%" fall time is increased, because of the asymmetry in the transverse component of the readback waveform. When the width of the P2 pole at the air bearing surface is equal to or less than that of P1, the vertical component of the head field is typically about two times the coercivity in the recording zone and the resultant head field is about 60° out-of-plane. When the head field is greater than about 45° or 50° out-of-plane, then the in-plane switching field of high coercivity media is reduced. As a result, the longitudinal dimension of the recorded transition is increased which leads to wider pulse widths and lower high frequency amplitudes. Again, as the write current through the head is increased, the vertical field increases, thus causing further degradation of high frequency readback amplitude, i.e., an increase in peakiness.

When the P2 pole is wider than the P1 pole, such as by a few microns, the transverse fields at the fringe zones are reduced, perhaps by 35% in magnitude compared to the above configurations, and also the non-parallel contours of the longitudinal component of the head field become parallel to the gap at the fringe zone. This favorable field distribution eliminates the hooks in the transition, since the transition is now essentially parallel to the gap at all points. A straight transition prevents the nonlinear interference of the current transition with the previous one during the writing cycle, also reducing peakiness.

The present invention substantially reduces asymmetry in the resulting readback waveforms by substantially reducing the transverse component during recording when the cross-section of pole P2 is wider than that of P1. Hence, the readback waveform is symmetrical and the magnitudes of the rise and fall times become nearly identical. This symmetry will result in a reduction of peak shift variability.

The present invention also reduces the vertical field at the recording zone such that the resultant head field is less than 50° out-of-plane. As a result, high coercivity media do not suffer any degradation in the magnitude of their in-plane switching field. Therefore, the high frequency readback amplitude remains almost constant with an increase in write current, thus minimizing peakiness.

Turning now to Fig. 3, which is a cross-sectional schematic view of the pole tips of a preferred recording head 20 of the present invention, it will be appreciated that a geometry is shown where the tip of pole P2 is wider than that of P1 near the gap.

In particular, poles P1 and P2 define a gap g, where the width $W_o^2$ of the P2 pole at the gap is preferably one or more microns wider than the width $W_o^1$ of the P1 pole at the gap. The additional width of pole P2 over pole P1 at the gap ensures that the transverse component of the head field at the recording zone is minimized. Hence, the medium is essentially magnetized in the longitudinal direction. The write fringing of such a head design is approximately 0.25 microns smaller than that which occurs from a head where the P1 pole is wider than the P2 pole at the gap. We speculate that, for a given track pitch, the width of the P2 pole can be increased slightly, which produces a larger readback signal, thus improving the signal-to-noise ratio of the recording system.

In an alternative configuration of the present invention, a third pole piece P3 may be formed as part of head 20, embedded within the gap layer g. This third head is indicated by the dotted outline within gap layer g as shown in Fig. 3. The third pole piece at its tip is preferably configured to be both thin, less wide than pole P2, and magnetically saturable. It will be appreciated by those skilled in the art that this saturation property can be selectively used by applying appropriate energization to the coil structure at the yoke, whereby the third pole is effectively inoperative during the write cycle. During the read cycle, the third pole is not saturated and effectively dominates reading such that a sharp transition waveform will result.

In known processes for making thin film heads, an insulating base layer of, for example $Al_2O_3$, is deposited on a ceramic substrate, such as 3M's ALSIMAG 204. A sputtered seed layer, such as NiFe, is applied over this insulating base layer (perhaps employing a metallic adhesive layer). Photoresist is then spun over the seed layer and a pole piece pattern is formed by a photolithographic process. After the resist is developed to form a mask, the first pole piece is plated through the mask. After this plating process is completed (including removing the mask, etching to exposed underlying seed and adhesion layers, remasking the first pole piece and then etching the plated areas of the pole), a gap layer, such as $SiO_2$ or $Al_2O_3$, is deposited thereon. However, this gap layer does not always adequately cover the P1 pole corners C1 and C2 defined by where the P1 pole top surface 32 meets the sidewalls 28 and 30, due to the abrupt change in topography of these sidewalls.

In the next steps, a coil structure is formed over the yoke with intermediate layers of insulation, and the second pole piece is formed over this coil structure and the gap layer. During these steps, a considerable thinning of the gap layer occurs, and it can become completely depleted at corners C1 and C2. During plating of the second pole piece, the width of the second pole at its tip is customarily plated to be narrower than the width of the first pole at its tip, in order to allow for microlithographic misalignment tolerances and perhaps also to avoid magnetic shorts occurring between the two poles at junctures C1 and C2 where the gap layer has thinned.

In practice of the present invention, the step at which the gap layer is deposited onto the P1 pole piece is preceded with a planarization process. This planarization involves forming a layer of non-magnetic material adjacent to the P1 pole on either side such that there is a uniform base on which the gap layer will be deposited. Hence, as shown in Fig. 3, the planarization layer assumes the same upper plane P as does the upper surface of pole P1.

As a result of the planarization layer, the gap layer assumes a uniform thickness over the entire P1 top surface, and if thinning occurs it does so uniformly over the entire gap layer during the successive steps of the process described above. The width of the second pole piece P2 then becomes independent of the width of pole P1, where the planarized gap layer is at least as wide as the overlaid P2 pole. Hence, when pole piece P2 is plated to be wider than or approximately equal to pole piece P1, no magnetic shorting occurs at the gap.

The configuration of the pole tips in practice of the present invention can be of any desired combination. For example, a substantially rectangular portion adjacent to the gap and a substantially trapezoidal portion adjacent to the rectangular portion can be defined in either or both of the pole tips, in order to minimize undershoots that result in the readback waveforms from thin film heads. Furthermore, it is recognized that other modifications and variations of the present invention will occur to those skilled in the art, and it is intended that all modifications and variations be included within the scope of the appended claims.

## Claims

1. A magnetic recording head, comprising:
at least a functionally first pole,
at least a functionally second pole,
the tip of said second pole being wider than that of said first pole.

2. The head of claim 1, wherein
said first pole defines a first pole tip,
said second pole defines a second pole tip,
said tips defining a portion of an air-bearing surface,
said first pole disposed to interact with a magnetic medium before said second pole interacts with said medium, thus defining a longitudinal operational direction for said head,
said poles separated by a gap section, said gap section's width running substantially perpendicular to said longitudinal direction, and
said gap section being at least as wide as said second pole tip and being wider than said first pole tip.

3. The head of claim 2, wherein said second pole is at least one micron wider than the first pole.

4. The head of claim 1, further comprising a third pole, said third pole located in said gap section.

5. The head of claim 1, wherein said third pole tip is less wide than the first pole tip.

6. The head of claim 2, further comprising a third pole, said third pole located in said gap section.

7. The head of claim 6, wherein said third pole tip is less wide than the first pole tip.

8. The head of claim 2, wherein one pole tip at said surface includes at least two regions of unequal area, one said region being adjacent to the gap.

9. The head of claim 8, wherein the region adjacent to the gap is the smaller of the two regions.

10. The head of claim 8, wherein the region adjacent to the gap is the larger of the two regions.

11. The head of claim 8, wherein said pole tip is said first pole tip.

12. The head of claim 8, wherein said pole tip is said second pole tip.

13. The head of claim 8, wherein the other pole tip in cross-section includes at least two regions of unequal area one such region being greater in area than the other, one such region being adjacent to the gap.

14. The head of claim 13, wherein of the said other pole tip the region adjacent to the gap is the smaller of the two regions of such other pole tip.

15. The head of claim 13, wherein of the said other pole tip the region adjacent to the gap is the larger of the two regions of such other pole tip.

16. The head of claim 2, wherein said poles form a single structure and are connected distal to said tips defining a yoke, said yoke including a coil structure having at least a first and a second lead, said leads coupleable to a source of electrical energy to complete an energization circuit.

17. The head of claim 4, wherein at least said first and second poles form a single structure and are connected distal to said tips defining a yoke, said yoke including a coil structure having at least a first, a second, and a third lead, said leads coupleable to a source of electrical energy to complete an energization circuit.

18. A magnetic recording head, comprising:
a substrate,
an insulating layer over said substrate,
a first pole piece upon said layer,
a second pole piece,
a gap section,
said gap section intermediate and coupled to said pole pieces, and
said gap section being at least about as wide as said second pole piece and wider than said first pole piece.

19. The head of claim 18, wherein a planarizing layer is defined upon said first pole piece, whereby said first pole piece plus said planarizing layer is at least about as wide as said second pole piece.

20. The head of claim 19, wherein said planarizing layer is comprised of $Al_2O_3$.

21. The head of claim 19, wherein said planarizing layer is comprised of $SiO_2$.

22. The head of claim 19, wherein said planarizing layer is comprised of photoresist material.

23. A method for forming the poles of a thin film head, the head having at least two poles separated by a gap section, the steps comprising:

(a) forming a planarizing layer at the first of said poles at its tip whereby a uniform planar area can be defined at said pole tip and said planarizing layer,

(b) forming said gap section coupled to said uniform planar area, and

(c) forming said second pole coupled to said gap section.

24. The method of claim 23, wherein said planarizing layer is comprised of photoresist material and wherein step (a) includes hard baking said material.

25. The method of claim 23, wherein step (a) includes forming a layer of insulating material adjacent to and over said first pole and lapping the insulating material such that the top surface of the first pole and the insulating material conform to a single plane whereby said uniform planar area is defined.

26. The method of claim 24, wherein said planarizing layer is comprised of $Al_2O_3$.

27. The method of claim 24, wherein said planarizing layer is comprised of $SiO_2$.

90 deg walls

12.4% leading undershoot

TYPICAL ISOLATED PULSE FROM A THIN FILM HEAD

FIG.1

FIG.3

TRANSITIONS RESULTING FROM POLES OF DIFFERENT
WIDTHS   (INPLANE ONLY  H = $H_c$ CONTOUR)

FIG. 2